**Europäisches Patentamt**

**European Patent Office**

**Office européen des brevets**

(11) Veröffentlichungsnummer: **0 248 260**
**A1**

(12) # EUROPÄISCHE PATENTANMELDUNG

(21) Anmeldenummer: **87107200.5**

(22) Anmeldetag: **18.05.87**

(51) Int. Cl.³: **C 04 B 28/02**
C 04 B 14/28
//(C04B28/02, 14:28, 18:14,
18:24), (C04B20/02, 14:08, 14:28,
18:24)

(30) Priorität: **02.06.86 AT 1474/86**
**13.10.86 CH 4078/86**

(43) Veröffentlichungstag der Anmeldung:
**09.12.87 Patentblatt 87/50**

(84) Benannte Vertragsstaaten:
**AT BE DE ES FR GB GR IT NL**

(71) Anmelder: **AMETEX AG**
**Eternitstrasse 3**
**CH-8867 Niederurnen(CH)**

(84) Benannte Vertragsstaaten:
**DE GR**

(71) Anmelder: **S.A. Financière Eternit**
**33, rue d'Artois**
**F-75008 Paris(FR)**

(84) Benannte Vertragsstaaten:
**FR IT**

(71) Anmelder: **Eternit-Werke Ludwig Hatschek AG**

**A-4840 Vöcklabruck(AT)**

(84) Benannte Vertragsstaaten:
**AT**

(71) Anmelder: **REDCO SA**

**B-2920 Kapelle-op-den-Bos(BE)**

(84) Benannte Vertragsstaaten:
**BE ES GB NL**

(72) Erfinder: **Kirchmayr, Karl**
**Am Pfarrerfeld 52**
**A-4840 Vöcklabruck(AT)**

(72) Erfinder: **Miko, Hans-Jürgen**
**Nachdemsee 182**
**A-4813 Altmünster(AT)**

(72) Erfinder: **Watzka, Bruno**
**Maximilianstrasse 4**
**A-4840 Vöcklabruck(AT)**

(72) Erfinder: **Studinka, Josef**
**Dolderstrasse 92**
**CH-8032 Zürich(CH)**

(72) Erfinder: **Schmitt-Henco, Carl**
**Kurfürstenpark**
**CH-8872 Weesen(CH)**

(74) Vertreter: **Scheidegger, Zwicky, Werner & Co.**
**Stampfenbachstrasse 48 Postfach**
**CH-8023 Zürich(CH)**

(54) **Mischung zur Herstellung von Formkörpern und deren Verwendung.**

(57) Die Mischung zur Herstellung von Formkörpern aus Faserzement enthält neben mindestens 5 Gew.-% puzzolanischer Kieselsäure auch einen Anteil an Kalksteinmehl. Damit wird ein Produkt hoher Festigkeit ohne Versprödungsneigung bzw. Rissbildung an der Oberfläche erzielt.

Bei der Verwendung der Mischung zur Herstellung von Formkörpern werden letztere aus einer wasserhältigen Werkstoffmischung geformt und bei 70–90°C während 5–12 Stunden abgebunden, vorzugseise unter simultaner Pressung.

## Mischung zur Herstellung von Formkörpern
## und deren Verwendung

Die Erfindung betrifft eine Mischung zur Herstellung von abgebundenen faserhaltigen Formkörpern, insbesondere nach dem Nassverfahren, die ein kalkhaltiges bzw. kalkabgebendes Bindemittel, Fasern und/oder faserartige Gebilde, - insbesondere Zellulosefasern - und hochreaktive puzzolanische Kieselsäure sowie gegebenenfalls übliche Zuschläge und/oder Zusätze, insbesondere Anmachhilfen, Fliessverbesserer und/oder Strukturverbesserer enthält.

Derartige Mischungen werden in bekannter Art im Nassverfahren auf einer Hatschekmaschine entwässert und geformt. Es ist bekannt, dass das anschliessende Abbinden des Zements bei Zimmertemperatur oder bei erhöhter Temperatur, z.B. bei 40°C - 100°C erfolgen kann; die rel. Luftfeuchtigkeit soll dabei höher als 85% sein. Die dem Abbinden folgende Erhärtung des hydraulischen Bindemittels kann bei Raumtemperatur oder unter hydrothermalen Bedingungen im Autoklaven erfolgen.

Die dabei eingesetzte staubförmige Kieselsäure ist ein besonders feinteiliges, puzzolanisches Produkt, das z.B. bei der Si-Elektrometalurgie in grossen Mengen anfällt und im deutschen Sprachgebrauch als kondensierter Kieselsäurestaub oder Kieselsäurerauch und international als condensed silica fume (CSF) bezeichnet wird. Ein weiteres entsprechendes Material ist Diatomit.

Bisher wurde in derartigen Mischungen das CSF in Mengenanteilen von 5 bis 40 Gew.-%, bezogen auf die Trockenmischung, eingesetzt. Es zeigte sich, dass die aus diesen Mischungen erhaltenen Formkörper zwar die erwünschte Festigkeit aufweisen, aber verspröden und schon bei geringen Beanspruchungen, wie sie z.B. bei Aenderungen der Feuchtigkeit beim Trocknen vor einer Lackierung der Oberfläche auftreten, rissig werden. Ein weiterer Nachteil ist die Verschlechterung der Produktivität bei der Nassverarbeitung, weil CSF das Entwässerungsverhalten des Ansatzes negativ beeinflusst.

Im Zuge von Forschungsarbeiten wurde gefunden, dass diese Versprödungsneigung mit Rissbildung der fertigen Formkörper vermieden werden kann, wenn hochreaktive puzzolanische Kieselsäure (CSF) in einer Menge von weniger als 5 Gew.-%, bezogen auf die Trockenmischung, zugesetzt wird. Leider können aber mit einer derartigen Mischung in der Regel nur ungenügende Festigkeitswerte erzielt werden, sodass diese an sich positive Erkenntnis das Problem im allgemeinen nicht zu lösen vermag.

Nunmehr wurde überraschenderweise gefunden, dass die genannte Versprödungsneigung mit Rissbildung der fertigen Formkörper und die verminderte Verarbeitungseignung des Ansatzes bei derartigen Mischungen bei trotzdem erzielbaren günstigen Festigkeitswerten vermieden oder doch zumindest wesentlich gebessert werden können, wenn man bei üblichen CSF-Anteilen der Mischung Kalksteinmehl zusetzt.

Dementsprechend sind die erfindungsgemässen Mischungen dadurch gekennzeichnet, dass der Anteil an puzzolanischer Kieselsäure mindestens 5 Gew.-%, bezogen auf die Trockenmischung, beträgt und die Mischung zusätzlich einen Gehalt an Kalksteinmehl aufweist.

Kalksteinmehl ist ein bekannter Füller auf dem Zementsektor; die Eigenschaft, durch CSF-Zusätze verursachter Versprödung entgegenzuwirken, ist aber völlig überraschend und andere bekannte Füller, wie z.B. Quarzmehl, zeigen diese Eigenschaft nicht.

Ebenfalls Gegenstand der Erfindung ist die Verwendung einer erfindungsgemässen Mischung bei der Herstellung von zementgebundenen Formkörpern, insbesondere Platten, wie z.B. Wellplatten, wobei erfindungsgemäss die Formkörper aus der wasserhältigen Werkstoffmischung gebildet und die Mischung bei einer Temperatur von 70 - 90°C während 5 - 12 Stunden zum Abbinden gebracht wird.

Vorzugsweise werden die der Wärmeeinwirkung unterzogenen Formkörper gleichzeitig einer Pressung unterworfen, wobei das Verpressen auch vor dem Abbinden im Wärmetunnel erfolgen kann.

Die Formkörper werden beispielsweise, einzeln oder gestapelt, zwischen erwärmte bzw. beheizte Formplatten gebracht, wo sie auch einer Pressung unterzogen werden können.

Die Erfindung wird im folgenden anhand von Versuchen näher erläutert. Zur Durchführung der Versuche wurden auf einer Hatschekmaschine Platten erzeugt. Die Muster wurden gepresst und 8 - 24 h bei einer Temperatur von 70 bis 90°C und einer relativen Luftfeuchte von mindestens 85% gelagert. Die Prüfung der Biegezugfestigkeit erfolgte nach 28 Tagen und einer Wasserlagerung von 24 bis 48 h im nassen Zustand der Muster. Während der Belastung auf einer Prüfmaschine Type "Instron 1125" wurde automatisch ein Lastverformungsdiagramm aufgenommen. Die Belastungsgeschwindigkeit betrug 20 mm/min. Aus den Daten des Lastverformungsdiagramms wurde der E-Modul der Muster errechnet. Die Bestimmung von Raumgewicht und Wasseraufnahme entspricht der in der OeNORM B 3522 angeführten Vorgangsweise.

Zur Bestimmung der Rissneigung der Platten wurden die Muster wechselweise einer Lagerung in Wasser und Luft von jeweils 70° unterzogen. Die Dauer der Wasserlagerung betrug 3 Tage und die der Luftlagerung 4 Tage. Nach jedem Zyklus wurden die Prüfmuster durch Augenschein auf Risse untersucht.

Zur Durchführung der Versuche wurden folgende Rohstoffe eingesetzt:

a) Portlandzement D 275 H, Blainezahl 3000 cm$^2$/g,
b) Kalksteinmehl (CaCO$_3$ Gehalt > 95%), Blainezahl 3500 cm$^2$/g,
c) CSF Handelsprodukt Fesilur 75 (SKW Trostberg),
   spez. Oberfläche etwa 20 m$^2$/g (SiO$_2$ Gehalt > 83%),
d) Sulfatzellstoff aufgemahlen auf 20 - 40° SR.

Die erhaltenen Ergebnisse sind in der folgenden Tabelle 1 zusammengefasst.

Man erkennt, dass die Biegezugfestigkeit mit dem CSF-Zusatz ansteigt, was bekannt war. Es nimmt allerdings auch die Rissempfindlichkeit zu. Ueberraschend ist, dass die CSF-Zugabe in geringen Dosen die Rissempfindlichkeit vermindert. Möglicherweise gibt es hier eine Wechselwirkung mit den Fasern des Ansatzes, die die Bindung zwischen Fasern und Matrix verbessert, wobei aber die CSF-Menge nicht ausreicht, um die Matrix zu verspröden. Allerdings ist die erzielbare Biegezugfestigkeit ungenügend.

Noch überraschender ist die Tatsache, dass das Kalksteinmehl die durch hohe CSF-Gehalte verursachte Versprödungsneigung der Matrix aufheben kann. Hier könnte eine Verdünnungswirkung angenommen werden, wobei aber trotz des dadurch verursachten niedrigen Zementgehalts die Biegezugfestigkeit der Platten ungefähr gleich bleibt.

Bei CSF-Anteilen über 5 Gew.-% wird erfindungsgemäss Kalksteinmehl, vorzugsweise 5 - 35 Gew.-%, insbesondere 10 - 25 Gew.-% Kalksteinmehl eingesetzt.

Die CSF-Anteile können beim Einsatz von Kalksteinmehl in weiten Bereichen variiert werden; vorzugsweise beträgt der CSF-Anteil 5 - 40 Gew.-%, insbesondere 5 - 10 Gew.-%.

## Tabelle 1

| Ansatz Nr. | 1 | 2 | 3 | 4 | 5 | 6 | 7 | 8 | 9 | 10 | 11 | 12 | 13 |
|---|---|---|---|---|---|---|---|---|---|---|---|---|---|
| Portlandzement | 93 | 85 | 78 | 72 | 92,3 | 88,2 | 84,5 | 77,9 | 76,9 | 68,9 | 69,3 | 61,5 | 56,0 |
| Zellstoff | 7 | 6,5 | 6,3 | 6,2 | 7,7 | 7,4 | 7,0 | 6,5 | 7,7 | 7,7 | 7,7 | 7,7 | 7,7 |
| CSF | 0 | 8,5 | 15,7 | 21,8 | 0 | 4,4 | 8,5 | 15,6 | 15,4 | 8,0 | 13,8 | 12,3 | 10,0 |
| Kalksteinmehl | | | | | | O | | | 0 | 15,4 | 9,2 | 18,5 | 26,3 |
| Biegezugfestigkeit N/mm² | 17,7 | 23,6 | 34,1 | 32,8 | 20,5 | 23,7 | 26,4 | 29,5 | 25,6 | 26,0 | 27,4 | 26,1 | 27,4 |
| E-Modul kN/mm² | 18,0 | 15,0 | 14,6 | 16,3 | 13,8 | 16,0 | 18,4 | 20,3 | 18,1 | 19,1 | 18,7 | 15,7 | 22,8 |
| Raumgew. kg/l | 1,66 | 1,65 | 1,62 | 1,56 | 1,74 | 1,74 | 1,75 | 1,77 | 1,71 | 1,68 | 1,70 | 1,70 | 1,66 |
| Wasseraufn. % | 10,0 | 16,4 | 18,0 | 17,7 | 17,8 | 18,8 | 18,5 | 18,0 | 20,2 | 21,2 | 20,2 | 20,6 | 22,1 |
| Anzahl der ohne Risse überstandenen Zyklen | 4 | 6 | 3 | 3 | 5 | * | 7 | 4 | 3 | * | * | * | * |

* auch nach 10 Zyklen rißfrei

Ebenso kann der Bindemittelanteil der erfindungsgemässen Mischungen in weiten Grenzen - abgestimmt auf den Verwendungszweck und auf deren sonstige Bestandteile - variiert werden; er kann von 20 bis 85 Gew.-% betragen und bewegt sich vorzugsweise zwischen 30 und 70 Gew.-%, insbesondere zwischen 45 und 70 Gew.-%.

Der Faseranteil der erfindungsgemässen Mischungen beträgt 5 - 20 Gew.-%; dabei sollen mindestens 5 Gew.-%, insbesondere 5 - 15 Gew.-%, Zellulosefasern vorliegen. Es hat sich gezeigt, dass niedrige CSF-Anteile besonders in Kombination mit Zellulosefasern günstige Ergebnisse bringen.

Eine besonders vorteilhafte erfindungsgemässe Mischung zur Herstellung von Formkörpern aus Faserzement enthält 5 - 10 Gew.-% puzzolanische, amorphe Kieselsäure; 10-35 Gew.-% Kalksteinmehl; 50-70 Gew.-% Zement und 5-12 Gew.-% Zellstoff (Zellulosefasern).

Mit einer solchen Mischung lassen sich Formkörper hoher Festigkeit und einwandfreier Oberfläche erzielen, ohne dass zum Abbinden eine aufwendige Autoklavbehandlung notwendig wäre.

Alle angegebenen Prozentsätze sind auf die Trockenmischung bezogen.

Unter die üblichen Zusätze, von denen bereits Anmachhilfen sowie Fliess- und/oder Strukturverbesserer erwähnt wurden, sind u.a. auch Abbindebeschleuniger und Flockungsmittel sowie andere Additive wie z.B. Wollastonit, Tone, Glimmer, Vermiculit, Kieselgur, Perlit, Flugasche u.dgl. zu zählen.

Die vorstehend beschriebenen, erfindungsgemässen Mischungen werden zur Herstellung von Formkörpern, insbesondere Platten, wie beispielsweise Wellplatten, aus Faserzement verwendet.

Dabei wird erfindungsgemäss so vorgegangen, dass die Formkörper aus der wasserhältigen Werkstoffmischung gebildet werden um danach bei einer Temperatur von 70 bis 90°C während 5 - 12 Stunden zum Abbinden gebracht zu werden.

Es hat sich dabei überraschenderweise gezeigt, dass Formkörper mit gegenüber dem Stand der Technik deutlich verbesserter Struktur und verbesserten mechanischen Eigenschaften erhalten werden, wenn die grünen Formkörper bei und/oder nach ihrer Bildung gleichzeitig einer mechanischen Druck- und einer Wärmeeinwirkung ausgesetzt werden, d.h. gleichzeitig verpresst und erwärmt werden.

Das liegt einerseits an der erfindungsgemässen Mischung und andererseits am Verfahrensablauf. Die Formkörper erreichen auch ohne Autoklavierung bereits nach wenigen Stunden 90 - 95% ihrer Endfestigkeit, so dass weitaus verbesserte Transport- und Lagerbedingungen als nach dem Stand der Technik erzielt werden.

Vorteilhaft wird so vorgegangen, dass die Wärme über Press- und/oder Formvorrichtungen auf die Formkörper aufgebracht wird, insbesondere über vorgewärmte Pressmatrizen, die vorzugsweise im Kreislauf geführt werden, wobei günstig eine wärmeisolierte Führung der Pressmatrizen entlang eines Teiles des Kreislaufes zur Verminderung jeder nicht die Formkörper betreffenden Wärmeabgabe vorgesehen ist.

Das erfindungsgemässe Vorgehen wird im folgenden anhand eines Beispiels näher erläutert:

Ein Ansatz aus Portlandzement, Kieselsäurestaub, Kalksteinmehl, Zellstoffasern und Wasser wurde auf einer Hatschek-Maschine zu einem Plattenvlies verarbeitet, das mit ca. 23°C abgezogen und unter Verwendung von auf
etwa 90°C vorgewärmten Pressblechen in bekannter Weise
zu einem Mischstapel verarbeitet wurde. Der Mischstapel
wurde etwa 40 min. lang einem Pressvorgang unterworfen,
dann mit Wärmeisoliermaterial abgehüllt und etwa 8h ruhen gelassen. Bei der folgenden Auflösung des Mischstapels hatten die geformten Platten und die Pressbleche
jeweils eine Temperatur von 60°C. Die geformten Platten
hatten bereits über 90% ihrer Endfestigkeit und wurden
ins Lager verbracht; die Pressbleche wurden gereinigt,
wobei ihre Temperatur auf 40°C abfiel, sowie anschliessend auf 90°C vorgewärmt und zur Mischstapelbildung
rückgeführt. Die geformten Platten wiesen ausgezeichnete Festigkeit, weitgehend verminderte Wasseraufnahme
und hervorragende Langzeitwitterungsbeständigkeit auf.

Das beschriebene Verfahren bringt weiterhin Energievorteile, da durch die unmittelbare Rückführung der Pressbleche nach nur kurzer Reaktionszeit deren innewohnende
Wärme, die zum Teil aus der Hydratationswärme des Zements stammt, nicht verloren geht und nur eine geringfügigere Temperaturdifferenz durch Wiederaufwärmen der
Pressbleche ausgeglichen werden muss. Es können auch
bereits mit zu verpressendem Material belegte Pressbleche vorerwärmt werden.

Die Vorerwärmung der Presswerkzeuge oder der Teile der
Presswerkzeuge, die Wärme an die Formkörper abgeben sollen, kann auf verschiedene Weise erfolgen. Insbesondere
bei Pressblechen hat es sich als besonders vorteilhaft
gezeigt, eine elektrische Induktionsheizung, vorzugsweise nur von einer Seite der Bleche her, vorzusehen.
Dies ist besonders günstig, wenn bereits mit dem grünen,
vorgeformten Faserzementprodukt belegte Pressbleche erwärmt werden.

P a t e n t a n s p r ü c h e

1. Mischung zur Herstellung von abgebundenen faserhaltigen Formkörpern, insbesondere nach dem Nassverfahren,
die ein kalkhaltiges bzw. kalkabgebendes Bindemittel, Fasern und/oder faserartige Gebilde, - insbesondere Zellulosefasern - und hochreaktive puzzolanische Kieselsäure
sowie gegebenenfalls übliche Zuschläge und/oder Zusätze,
insbesondere Anmachhilfen, Fliessverbesserer und/oder
Strukturverbesserer enthält, dadurch gekennzeichnet, dass
der Anteil an puzzolanischer Kieselsäure mindestens
5 Gew.-%, bezogen auf die Trockenmischung, beträgt und
die Mischung zusätzlich einen Gehalt an Kalksteinmehl
aufweist.

2. Mischung nach Anspruch 1, dadurch gekennzeichnet, dass der Gehalt an Kalksteinmehl 5 - 35 Gew.-%,
insbesondere 10 - 25 Gew.-%, bezogen auf die Trockenmischung beträgt.

3. Mischung nach einem der Ansprüche 1 und 2,
dadurch gekennzeichnet, dass der Anteil an puzzolanischer Kieselsäure 5 - 40 Gew.-%, insbesondere 5 - 10
Gew.-%, bezogen auf die Trockenmischung, beträgt.

4. Mischung nach einem der Ansprüche 1 bis 3,
dadurch gekennzeichnet, dass der Anteil an Bindemittel,
insbesondere Zement, 20 - 85 Gew.-%, vorzugsweise
30 - 70 Gew.-%, insbesondere 45 - 70 Gew.-%, bezogen
auf die Trockenmischung, beträgt.

5. Mischung nach einem der Ansprüche 1 bis 4,
dadurch gekennzeichnet, dass der Anteil an Fasern
5 - 20 Gew.-%, bezogen auf die Trockenmischung, beträgt,
wobei mindestens 5 Gew.-%, insbesondere 5 - 15 Gew.-%,
Zellulosefasern vorliegen.

F 14 447 - WR

0248260

6. Mischung nach einem der Ansprüche 1 bis 5, dadurch gekennzeichnet, dass die Mischung Flockungsmittel, Abbindebeschleuniger und/oder Verarbeitbarkeitsverbesserer enthält.

7. Mischung nach Anspruch 1, dadurch gekennzeichnet, dass sie 5 - 10 Gew.-% puzzolanische, amorphe Kieselsäure, 10 - 35 Gew.-% Kalksteinmehl, 50 - 70 Gew.-% Zement, und 5 - 12 Gew.-% Zellulosefasern enthält, wobei alle Gewichtsanteile auf das Gesamtgewicht der Trockenmischung bezogen sind.

8. Verwendung einer Mischung nach einem der Ansprüche 1 - 7 bei der Herstellung von zementgebundenen Formkörpern, dadurch gekennzeichnet, dass die Formkörper aus der wasserhältigen Werkstoffmischung gebildet und die Mischung bei einer Temperatur von 70 - 90° C während 5 - 12 Stunden zum Abbinden gebracht wird.

9. Verwendung nach Anspruch 8, dadurch gekennzeichnet, dass die zum Abbinden der Werkstoffmischung einer Wärmeeinwirkung unterworfenen Formkörper gleichzeitig einer Pressung unterworfen werden.

10. Verwendung nach Anspruch 8, dadurch gekennzeichnet, dass die aus der Werkstoffmischung gebildeten Formkörper verpresst und anschliessend in einem Wärmetunnel abgebunden werden.

11. Verwendung nach einem der Ansprüche 8 - 10, dadurch gekennzeichnet, dass die Formkörper zur Abbindung der Werkstoffmischung zwischen erwärmte Formplatten gebracht werden, wobei über diese Platten gegebenenfalls eine Pressung erfolgt.

12. Verwendung nach Anspruch 11, dadurch gekennzeichnet, dass die Wärme- und gegebenenfalls Pressbehandlung an zwischen Formplatten gestapelten Formkörpern erfolgt.

Europäisches Patentamt

**EUROPÄISCHER RECHERCHENBERICHT**

Nummer der Anmeldung

EP 87 10 7200

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| P,X | EP-A-0 199 070 (AMETEX) <br> * Ansprüche 1,7,10 * <br><br> --- | 1-9 | C 04 B 28/02 <br> C 04 B 14/28 // <br> ( C 04 B 28/02 <br> C 04 B 14:28 |
| X | FR-A-2 312 467 (GAF CORP.) <br> * Ansprüche 1,2,6; Seite 6, Zeile 37 - Seite 7, Zeile 5 * <br><br> --- | 1-9 | C 04 B 18:14 <br> C 04 B 18:24 ) <br> ( C 04 B 28/02 <br> C 04 B 14:08 <br> C 04 B 14:28 |
| Y | EP-A-0 068 742 (CAPE BOARDS & PANELS) <br> * Ansprüche 1,10,13,19 * <br><br> --- | 1-6,8, 10 | C 04 B 18:24 ) |
| Y | DE-A-2 409 116 (F. RUESCH) <br><br> * Seite 2, Zeilen 4-15; Anspruch 1 * <br><br> --- | 1-6,8, 10 | |
| A | DE-A-3 011 330 (H. HIENDL) <br><br> --- | | **RECHERCHIERTE SACHGEBIETE (Int. Cl.4)** <br><br> C 04 B 28/00 |
| A | EP-A-0 034 801 (FULGURITWERKE SEELZE & EICHRIEDE) <br><br> ----- | | |

Der vorliegende Recherchenbericht wurde für alle Patentansprüche erstellt.

| Recherchenort | Abschlußdatum der Recherche | Prüfer |
|---|---|---|
| DEN HAAG | 08-09-1987 | DAELEMAN P.C.A. |